# EUROPEAN PATENT APPLICATION

(11) **EP 1 482 401 A2**
(43) Date of publication of application: **01.12.2004**
(21) Application number: 04010913.4
(22) Date of filing: 07.05.2004
(51) Int. Cl.: G06F 3/033

(54) **Apparatus, systems and methods relating to improved user interaction with a computing device**

(30) Priority: 30.05.2003 US 474686 P; 27.02.2004 US 788813
(71) Applicant: MICROSOFT CORPORATION, Redmond, WA 98052 (US)
(72) Inventor: Proctor, David W., Bellevue, WA 98005 (US); Cerceo, Michael, Seattle, WA 98102 (US); Padmanabhan, Udiyan Ilanjeran, Redmond, WA 98052 (US)
(74) Representative: Grünecker, Kinkeldey, Stockmair & Schwanhäusser Anwaltssozietät

(57) **Abstract**

Apparatus, systems and methods for enabling an improved portable media player are provided. The apparatus provides improved media recording, synchronization, rendering and user interface experiences for a user. In various embodiments, portable media players are provided with a closed position for substantially protecting a media screen when music is being played, and an open position which uncovers the media screen for the viewing of video, photos, movies and the like. User Interface controls may be located on the various embodiments of the portable media players, and the user interface controls may include a touch pad user interface component substantially in the form of an arc which may be of varying or substantially uniform predefined width. In some embodiments, various forms of an arc are provided, e.g., in the form of a quarter circle touchpad, which facilitates the discovery and navigation of media via a first natural movement of a finger. In other embodiments, various forms of an arc is provided in the form of a curved cavity, such as a scalloped three-dimensional imprint, which facilitates the discovery and navigation of media via a second natural movement of a finger.

## Description

### CROSS REFERENCE TO RELATED APPLICATION

The present application claims the benefit of U.S. Provisional Patent Appln. No. 60/474,686, filed May 30, 2003.

### FIELD OF THE INVENTION

The present invention is directed to an improved portable media apparatus and corresponding methods that provide an improved media recording, synchronization, rendering and user interface experience for a user.

### BACKGROUND

More and more, consumers around the world are discovering, downloading, managing and playing back digital photos, music and movies on their computers. There is a need, though, for a new generation of smart portable media players, commonly referred to as PMPs, that make a user's favorite content from the user's computer available to the user, wherever located, whenever wanted.

Although size need not be limiting, a typical portable media player is a device generally about the size of a book that can play audio and video files as well as display photos. Such a device may have an independent processor, a reasonably sized hard drive and a small color display, e.g., RGB. USB and wireless LAN (WLAN) technology are generally made available to transfer data from a PC. In this regard, first-generation digital portable devices have offered basic PC synchronization features and enabled consumers to take limited amounts of media to go.

Portable media players are thus handheld personal media players that enable entertainment on the go by providing consumers with an easy and complete solution to download, store and play back all their favorite digital media content including video, music and photos in an accessible manner because, once content is delivered to the device, e.g., as part of a synchronization process, the content is stored locally on the device.

In this regard, there is a need for an improved design that facilitates not only the playback of music, but also the rendering of video and photos, and for easy switching between the two modes. There is further a need for an improved user interface for a portable media player that facilitates the user's discovery and rendering of media according to the user's desires. There is still further a need for an ergonomic user interface that works well with the natural movement of a finger, such as a thumb, while engaging with a media experience. It is still further desirable to provide alternative user interface arrangements for facilitating interaction in connection with a media experience, or any interaction that lends itself to the simplicity of finger movement.

### SUMMARY OF THE INVENTION

Apparatus, systems and methods for enabling an improved portable media player are provided. The apparatus provides improved media recording, synchronization, rendering and user interface experiences for a user. In various embodiments, portable media players are provided with a closed position for substantially protecting a media screen when music is being played, and an open position which uncovers the media screen for the viewing of video, photos, movies and the like. User Interface controls may be located on the various embodiments of the portable media players, and the user interface controls may include a touch pad user interface component substantially in the form of an arc which may be of varying or substantially uniform predefined width. In some embodiments, various forms of an arc are provided, e.g., in the form of a quarter circle touchpad, which facilitates the discovery and navigation of media via a first natural movement of a finger. In other embodiments, various forms of an arc are provided in the form of a curved cavity, such as a scalloped three-dimensional imprint, which facilitates the discovery and navigation of media via a second natural movement of a finger, e.g., a thumb.

Other features and embodiments of the present invention are described below.

### BRIEF DESCRIPTION OF THE DRAWINGS

The systems and methods for providing improved user interface experiences in accordance with the present invention are further described with reference to the accompanying drawings in which:
Figure 1A is a block diagram representing an exemplary network environment having a variety of computing devices to which the various embodiments of the portable media player of the present invention may be connected or synchronized;
Figure 1B is a block diagram representing a first exemplary non-limiting computing device in connection with which embodiments of the user interfaces of the invention may be included;
Figure 1C is a block diagram representing a second exemplary non-limiting computing device in connection with which embodiments of the user interfaces of the invention may be included;
Figure 2 illustrates various exemplary embodiments of portable media players in which the user interface techniques of the invention may be implemented;
Figure 3 illustrates an exemplary usage scenario for portable media player embodiments of the invention;
Figures 4A to 4D illustrate exemplary user interface controls for the various embodiments of portable media players that may include the invention;
Figures 5A to 5D illustrate embodiments of a user interface control of the invention suited to the natural action of a first type of movement of a finger;
Figures 6A to 6E illustrate embodiments of a user interface control of the invention suited to the natural action of a second type of movement of a finger; and
Figure 7 is an exemplary non-limiting flow diagram illustrating a user interaction with the various embodiments of the user interface control provided in accordance with the invention.

### DETAILED DESCRIPTION OF ILLUSTRATIVE EMBODIMENTS

### Overview

As mentioned, the invention provides apparatus, systems and methods for enabling an improved portable media player. In various embodiments, the invention includes: (1) improved user interface and associated software, (2) structural advantages nowhere found in the prior art and (3) augmentable functionality to suit a user's needs and desires in connection with a personalized and customizable and enriched media experience.

### Exemplary Networked and Distributed Environments

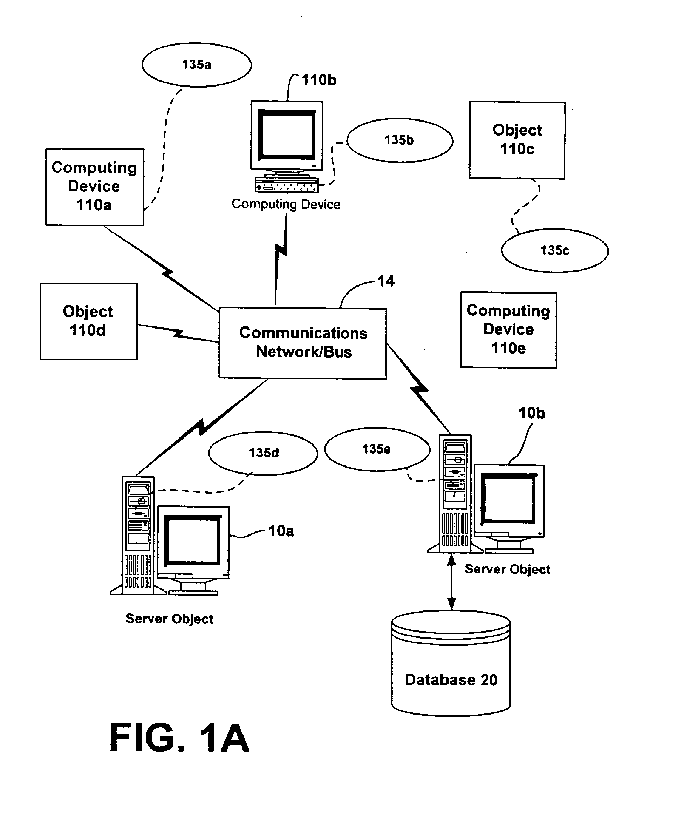

Fig. 1A provides a schematic diagram of an exemplary networked or distributed computing environment. The distributed computing environment comprises computing objects 10a, 10b, etc. and computing objects or devices 110a, 110b, 110c, etc. These objects may comprise programs, methods, data stores, programmable logic, etc. The objects may comprise portions of the same or different devices such as PDAs, televisions, MP3 players, televisions, personal computers, personal or portable media players, etc. Each object can communicate with another object by way of the communications network 14. This network may itself comprise other computing objects and computing devices that provide services to the system of Fig. 1A. In accordance with an aspect of the invention, each object 10a, 10b, etc. or 110a, 110b, 110c, etc. may contain an application that might make use of an API, or other object, software or hardware, that may interact with a user interface of a portable media player in accordance with the invention, or media on any of the other devices in the network. Moreover, the invention is not limited to a user interface provided on a portable media player, but rather the touchpad user interface embodiments of the invention may be implemented for any application that may benefit from the ease of using finger ergonomic input, such as the sweeping or bending of a finger, such as a thumb.

It can also be appreciated that an object, such as 110c, may be hosted on another computing device 10a, 10b, etc. or 110a, 110b, etc. Thus, although the physical environment depicted may show the connected devices as computers, such illustration is merely exemplary and the physical environment may alternatively be depicted or described comprising various digital devices such as PDAs, televisions, MP3 players, etc., software objects such as interfaces, COM objects and the like.

There are a variety of systems, components, and network configurations that support distributed computing environments. For example, computing systems may be connected together by wired or wireless systems, by local networks or widely distributed networks. Currently, many of the networks are coupled to the Internet, which provides the infrastructure for widely distributed computing and encompasses many different networks.

In home networking environments, there are at least four disparate network transport media that may each support unique protocol(s), such as Power line, data (both wireless and wired), voice (e.g., telephone) and entertainment media. Home control devices such as light switches and appliances may use power line for connectivity. Data Services may enter the home as broadband (e.g., either DSL or Cable modem) and are accessible within the home using either wireless (e.g., HomeRF or 802.11b) or wired (e.g., Home PNA, Cat 5, even power line) connectivity. Voice traffic may enter the home either as wired (e.g., Cat 3) or wireless (e.g., cell phones) and may be distributed within the home using Cat 3 wiring. Entertainment media, or other graphical data, may enter the home either through satellite or cable and is typically distributed in the home using coaxial cable. IEEE 1394 and DVI are also used as digital interconnects for clusters of media devices. All of these network environments and others that may emerge as protocols and/or standards may be interconnected to form an intranet that may be connected to the outside world by way of the Internet, and a user may interact with all of the user's media through such an intranet, or beyond. In short, a variety of disparate sources exist for the storage and transmission of data, and consequently, moving forward, computing devices will require ways of sharing data, such as data accessed or utilized incident to program objects or media objects, which may be utilized in connection with the user interface of the present invention.

Thus, Fig. 1A illustrates an exemplary networked or distributed environment, with a server in communication with client computers via a network/bus, of which a media device having any of the embodiments of the user interface of the invention may take advantage to access and share media. In more detail, a number of servers 10a, 10b, etc., are interconnected via a communications network/bus 14, which may be a LAN, WAN, intranet, the Internet, etc., with a number of client or remote computing devices 110a, 110b, 110c, 110d, 110e, etc., such as a portable computer, handheld computer, thin client, networked appliance, media device, or other device, such as a VCR, TV, oven, light, heater and the like in accordance with the present invention. It is thus contemplated that the present invention may apply to any computing device in connection with which it is desirable to interact with a device of any kind. For instance, one may appreciate that a dimmer switch of a light would benefit from the dual regions of variable input enabled by the various implementations of the user interface of the invention.

In a network environment in which the communications network/bus 14 is the Internet, for example, the servers 10a, 10b, etc. can be Web servers with which the clients 110a, I 10b, 110c, 110d, 110e, etc. communicate via any of a number of known protocols such as HTTP. Servers 10a, 10b, etc. may also serve as clients 110a, 110b, 110c, 110d, 110e, etc., as may be characteristic of a distributed computing environment. Communications may be wired or wireless, where appropriate. Client devices 110a, 110b, 110c, 110d, 110e, etc. may or may not communicate via communications network/bus 14, and may have independent communications associated therewith. For example, in the case of a TV or VCR, there may or may not be a networked aspect to the control thereof and the control of such a device may include the various user interfaces implemented in accordance with the invention, whether via a networked control source (e.g., from the Internet), a local control source (e.g., on the TV console) or remote control source (e.g., infrared, Bluetooth or other remote control device). Each client computer 110a, 110b, 110c, 110d, 110e, etc. and server computer 10a, 10b, etc. may be equipped with various application program modules or objects 135 and with connections or access to various types of media storage elements or objects, across which files may be stored or to which portion(s) of media files may be downloaded or migrated. Any computer 10a, 10b, 110a, 110b, etc. may be responsible for the maintenance and updating of a database 20 or other media storage element in accordance with the present invention, such as a database or memory 20 for storing media data processed, extracted or rendered incident to benefiting from the functionality of a user interface of the invention. Thus, the present invention can be utilized in a computer network environment having client computers 110a, 1 10b, etc. that can access and interact with a computer network/bus 14 and server computers 10a, 10b, etc. that may interact with client computers 110a, 110b, etc. and other like devices, and databases 20.

### Exemplary Computing Devices

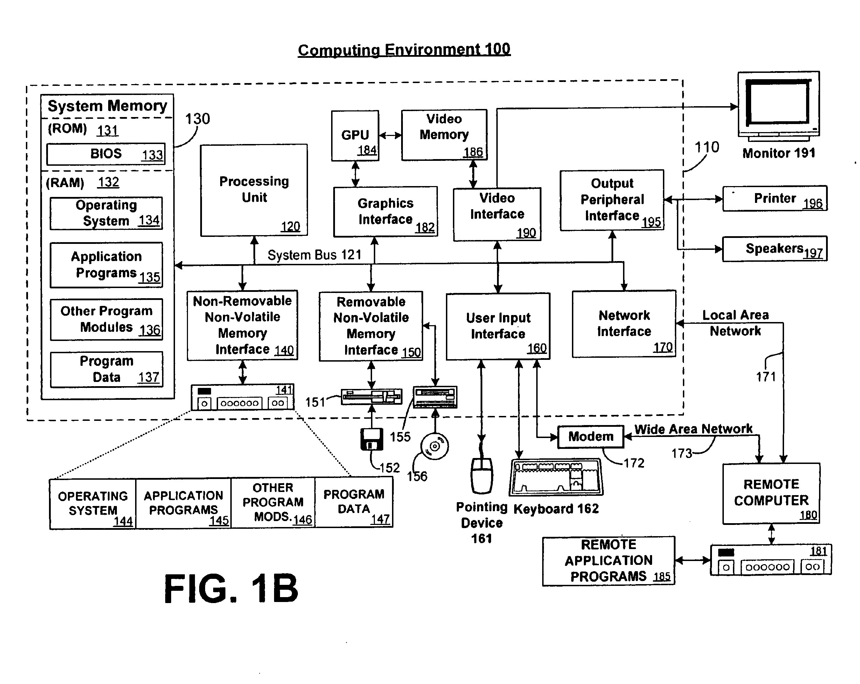

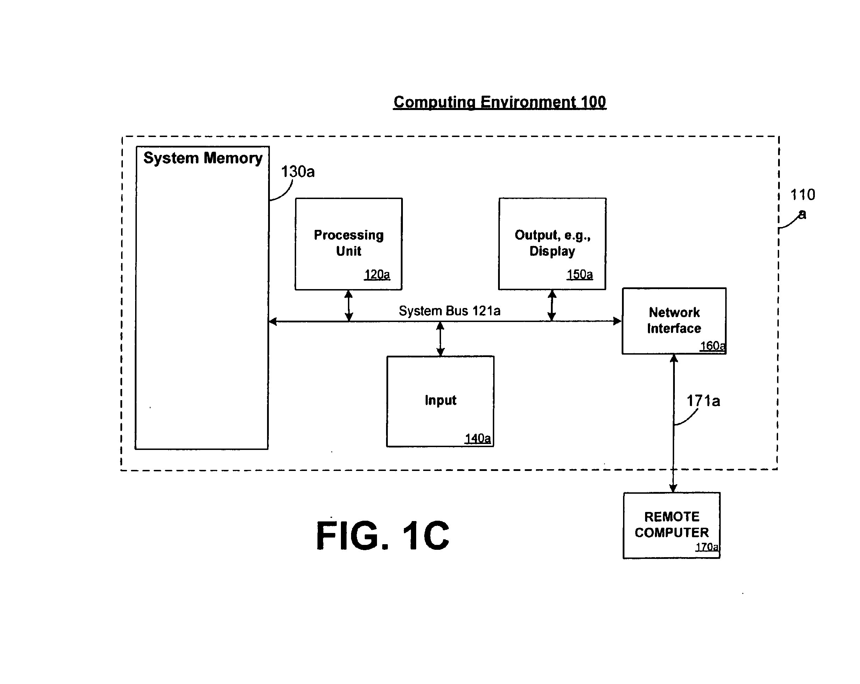

Figs. 1B and 1C and the following discussion are intended to provide a brief general description of suitable computing environments in connection with which the invention may be used. It should be understood, however, that handheld, portable and other computing devices and computing objects of all kinds are contemplated for use in connection with the present invention. While general purpose computers are described below, these are but two examples. Smart displays, Tablet PCs and flat display monitors, for instance, could include the user interface embodiments of the invention, although as described amply elsewhere, the invention is by no means limited to flat display monitors. The present invention may be implemented in an environment of networked hosted services in which very little or minimal client resources are implicated, e.g., a networked environment in which the client device serves merely as an interface to the network/bus, such as an object placed in an appliance. In essence, anywhere there is a computing device or peripheral that includes media objects, such as photos, movies, video or audio of any kind, can benefit from the user interface techniques of the invention. Any such place is thus a desirable, or suitable, environment for the inclusion of a user interface of the invention to provide an enhanced media experience generally suited to the operation of human fingers.

Although not required, any software used with the invention can be implemented via an operating system, for use by a developer of services for a media device or object, and/or included within application software that operates in connection with a portable media player in accordance with the invention, or provided within the portable media player itself. Software may be described in the general context of computer-executable instructions, such as program modules, being executed by one or more computers, such as client workstations, servers or other devices. Generally, program modules include routines, programs, objects, components, data structures and the like that perform particular tasks or implement particular abstract data types. Typically, the functionality of the program modules may be combined or distributed as desired in various embodiments. Moreover, those skilled in the art will appreciate that the invention may be practiced with other computer system configurations and protocols. Other well known computing systems, environments, and/or configurations that may be suitable for use with the invention include, but are not limited to, personal computers (PCs), automated teller machines, server computers, hand-held or laptop devices, multi-processor systems, microprocessor-based systems, programmable consumer electronics, network PCs, appliances, lights, environmental control elements, minicomputers, mainframe computers and the like. The invention may also be practiced in distributed computing environments where tasks are performed by remote processing devices that are linked through a communications network/bus or other data transmission medium. In a distributed computing environment, program modules may be located in both local and remote computer storage media including memory storage devices, and client nodes may in turn behave as server nodes.

Figs. 1B and 1C thus illustrate examples of a suitable computing system environment 100 in connection with which the invention may be utilized, although as made clear above, the computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

With reference to Fig. 1B, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CDROM, digital versatile disks (DVD) or other optical disk storage, magnetic cassettes, magnetic tape, magnetic disk storage or other magnetic storage devices, or any other medium which can be used to store desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Fig. 1B illustrates operating system 134, application programs 135, other program modules 136, and program data 137.

The computer 110 may also include other removable/non-removable, volatile/nonvolatile computer storage media. By way of example only, Fig. 1B illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156, such as a CDROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in Fig. 1B provide storage of computer readable instructions, data structures, program modules and other data for the computer 110. In Fig. 1B, for example, hard disk drive 141 is illustrated as storing operating system 144, application programs 145, other program modules 146, and program data 147. Note that these components can either be the same as or deferent from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port or a universal serial bus (USB). A graphics interface 182, such as Northbridge, may also be connected to the system bus 121. Northbridge is a chipset that communicates with the CPU, or host processing unit 120, and assumes responsibility for accelerated graphics port (AGP) communications. One or more graphics processing units (GPUs) 184 may communicate with graphics interface 182. In this regard, GPUs 184 generally include on-chip memory storage, such as register storage and GPUs 184 communicate with a video memory 186, wherein the application variables of the invention may have impact. GPUs 184, however, are but one example of a coprocessor and thus a variety of coprocessing devices may be included in computer 110, and may include a variety of procedural shaders, such as pixel and vertex shaders. A monitor 191 or other type of display device is also connected to the system bus 121 via an interface, such as a video interface 190, which may in turn communicate with video memory 186. In addition to monitor 191, computers may also include other peripheral output devices such as speakers 197 and printer 196, which may be connected through an output peripheral interface 195.

The computer 110 may operate in a networked or distributed environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Fig. 1B. The logical connections depicted in Fig. 1B include a local area network (LAN) 171 and a wide area network (WAN) 173, but may also include other networks/buses. Such networking environments are commonplace in homes, offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Fig. 1B illustrates remote application programs 185 as residing on memory device 181. It will be appreciated that the network connections shown are exemplary and other means of establishing a communications link between the computers may be used.

With reference to Fig. 1C, another exemplary device for implementing the invention includes a general purpose computing device in the form of a computer 110a. Components of computer 110a may include, but are not limited to, a processing unit 120a, a system memory 130a, and a system bus 121a that couples various system components including the system memory to the processing unit 120a. The system bus 121a may be any of several types of bus structures including a memory bus or memory controller, a peripheral bus, and a local bus using any of a variety of bus architectures.

Computer 110a typically includes a variety of computer readable media. As above, computer readable media can be any available media that can be accessed by computer 110a. The system memory 130a may include computer storage media in the form of volatile and/or nonvolatile memory such as read only memory (ROM) and/or random access memory (RAM). A basic input/output system (BIOS), containing the basic routines that help to transfer information between elements within computer 110a, such as during start-up or initiation of an application or user interface, may be stored in memory 130a. Memory 130a typically also contains data and/or program modules that are immediately accessible to and/or presently being operated on by processing unit 120a. By way of example, and not limitation, memory 130a may also include an operating system, application programs, other program modules, and program data. As above, the computer 110a may also include other removable/non-removable, volatile/nonvolatile computer storage media. A hard disk drive is typically connected to the system bus 121a through a non-removable memory interface such as an interface, and a magnetic disk drive or optical disk drive is typically connected to the system bus 121a by an interface, such as a removable memory interface.

A user may enter commands and information into the computer 110a through input devices such as a keyboard and pointing device, commonly referred to as a mouse, trackball, touch pad, pen or stylus, etc. Other input devices may include a microphone, joystick, game pad, satellite dish, scanner, or the like. These and other input devices are often connected to the processing unit 120a through user input 140a and associated interface(s) that are coupled to the system bus 121a, but may be connected by other interface and bus structures, such as a parallel port, game port or a universal serial bus (USB). A graphics subsystem may also be connected to the system bus 121a. A monitor or other type of display device is also connected to the system bus 121a via an interface, such as output interface 150a, which may in turn communicate with video memory. In addition to a monitor, computers may also include other peripheral output devices such as speakers and a printer, which may be connected through output interface 150a.

The computer 110a may operate in a networked or distributed environment using logical connections to one or more other remote computers, such as remote computer 170a, which may in turn have media capabilities similar to, but different from device 110a. The remote computer 170a may be a personal computer, a server, a router, a network PC, a peer device or other common network node, or any other remote media consumption or transmission device, and may include any or all of the elements described above relative to the computer 110a. The logical connections depicted in Fig. 1C include a network 171a, such local area network (LAN) or a wide area network (WAN), but may also include other networks/buses. Such networking environments are commonplace in homes, offices, enterprise-wide computer networks, intranets and the Internet.

When used in a LAN networking environment, the computer 1 10a is connected to the LAN 171a through a network interface or adapter. When used in a WAN networking environment, the computer 1 10a typically includes a modem or other means for establishing communications over the WAN, such as the Internet. A modem, which may be internal or external, may be connected to the system bus 121a via the user input interface of input 140a, or other appropriate mechanism. In a networked environment, program modules depicted relative to the computer 110a, or portions thereof, may be stored in a remote memory storage device. It will be appreciated that the network connections shown and described are exemplary and other means of establishing a communications link between the computers may be used.

While the invention may be included in the above-described architectures as an input component, it should be abundantly clear that the invention is not so limited, and that the user interface techniques of the invention may be implemented in any device or object that may benefit from a natural interaction with a finger, such as a portable media player, stereo sound system, a light switch, etc.

### Apparatus, Systems and Methods for Providing an Improved User Experience

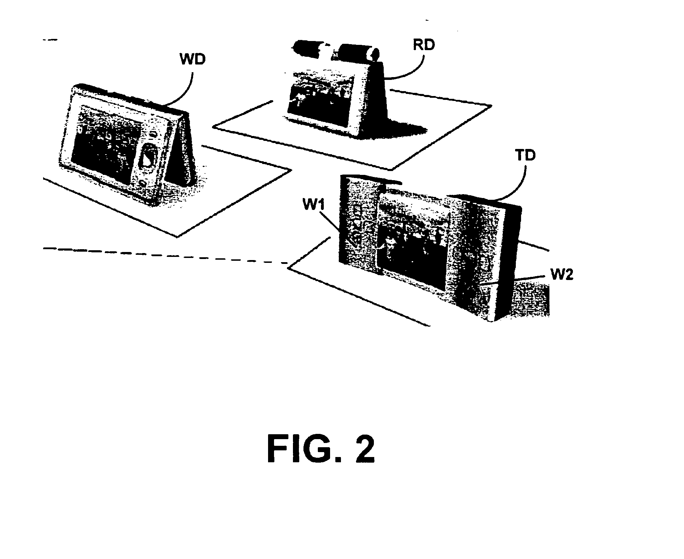

Apparatus, systems and methods for enabling an improved user interface experience, such as provided for a portable media player, is provided in accordance with the invention. Various portable media players are designed to provide a compact package, integrated screen protection, a personalized feel, environmental suitability to playing sound versus watching video/pictures (e.g., standing, holding and carrying), a perceptional viewing angle when standing and a logical component layout for ease of user interface. Accordingly, exemplary further devices and objects that may include the user interface embodiments of the invention include a roller design RD, a wallet design WD and a theatre design TD, as depicted in Fig. 2.

The functionality provided by the wallet design WD is illustrated by conceptualizing a hand holding the "wallet" closed to protect the screen of the device, and also from conceptualizing the wallet sitting or standing on a surface, partially opened, to give the user a view of the small screen on the front at a desired angle. Advantageously, when the wallet is closed, the small video screen is protected. The wallet design provides a design from the inside out, giving a very flexible usage model. In one implementation of the wallet design WD, the design includes a soft-hard contrast as between the wallet material and the video screen. The wallet design WD also provides built in screen protection, and is self standing, for instance, as a result of an elastomeric hinge. The wallet design WD includes an integrate cover "from the inside out" instead of adding a cover as an addition. The combination of hard and soft materials provides a nice feeling aesthetic to a user. The outside, when closed, reveals very little about the product as a theft deterrent. The soft elastomeric hinge, allows for multiple positions on the table, lap, or any other environment as well.

The roller design RD is depicted in the upper right of Fig. 2. Similar to the wallet design, when the roller pivots, the screen can be angled to the user's desire. Advantageously, the roller design RD gives the user not only pivoting abilities with the rollers, but also user interface control, by turning the rollers, by sliding the rollers about their longitudinal axes, or by pressing buttons on the ends of the rollers. The roller design RD provides a generally clamshell design, an input focused design, machined material fell, screen protection and self standing capabilities. The roller design RD includes optimal input rollers for navigation and transport controls, wherein the buttons are clustered. The roller portable media player hinges around the input rollers/input scrollers. In one embodiment, a design is implemented that looks somewhat similar to a jewel box, optionally machined in aluminum or molded magnesium.

The theatre design TD is depicted in the open position at the bottom of Fig. 2. Advantageously, the slidable "wings" W1 and W2 of the theatre design TD enable several advantages including functional augmentation of the device, protection of the video screen while optionally leaving some video screen available for other display purposes even when the wings are closed. When set down on the table, the theatre design TD is angled for optimal viewing, and buttons on the "wings" W1 and W2 of the device give natural input capabilities to a user holding the device. Embodiments of the user interface of the invention may be included on the wings W1 and/or W2 of the theatre design TD. The theatre design TD provides a desirably small package, a viewable opening for the display of additional information even when the wings W1 and W2 are closed. The theatre design TD also provides a "hard outside, but soft inside" user experience and a maximum grip area because the wings W1 and W2 of the device slide. Moreover, the theatre design TD does not give up space by folding or retracting, inherent screen protection is built into the design and a self standing angled view of the device and media screen can be achieved merely by placing the device on a surface. Of structural significance, the device may have a curve towards the user to emphasize the personal cinema experience by placing the user at the center of the curved experience. The theatre design TD includes enclosure by the wings that expose a hint of the media screen, allowing a user, for instance, to receive feedback about music playing while the device is in the closed position. Large grip areas (i.e., the wings W and W2) are provided for handling the device, solving a typical challenge between devices that are horizontally versus vertically oriented. Additionally, because the wings slide together and meet in a secure fashion, the device possesses a secure feel when the device is closed.

Any of the embodiments described herein that include a cartridge, or sleeve, or other removable component may benefit from augmentation of functionality for the device. For instance, with respect to the theatre design TD that includes wings W1 and/or W2 that the user may hold while viewing video to secure and control the device via user interface controls located on the wings W and/or W2, the wings W1 and/or W2 may be interchangeable with other wings to swap or augment functionality. For instance, it may be desirable for a left handed person to have the user interface controls normally associated with the left and right wings to be located with the right and left wings, respectively, to accommodate a preference for dominant hand use. The wings also provide a cosmetic effect as well depending on their design, and thus different cosmetic effects can be achieved by swapping or interchanging sleeves. In this regard, the user interface of the invention may all be thought of as being provided according to alternate orientations to accommodate both left handed users and right handed users. For instance, left hand and right hand devices may be sold, or by enabling the swapping of user interface components, e.g., including embodiment(s) of the user interface controls of the invention, a user may turn a right hand device into a left hand device (the real distinction being whether the consumer prefers to use the right finger or the left finger). Other embodiments of the invention work well with either the right or the left hand.

The alternate functionality of a portable media player that may be achieved in accordance with the invention can be achieved either by removing a wing and replacing it with another wing with an alternate set of functionality, or by attaching a sleeve to an existing wing which augments the functionality of the existing wing. Moreover, a wing or sleeve may also behave as a detachable remote control device which may include one or more embodiments of the user interface controls of the invention. A sleeve may be a sliding plate face, a wrapping component, or any other device that attaches to wing and accordingly augments the functionality of the portable media player to which it is attached, e.g., by adding the functionality of an embodiment of the user interface controls of the invention.

As mentioned above, embodiments of the user interface controls of the invention are of great benefit when applied in a computing environment for experiencing media, because as will become more evident from the embodiments of the user interface of the invention explained in more detail below, the invention may apply to raising or lowering the volume of an audio stream from a device, or apply to the skipping forward or backward in a video sequence, or slideshow (e.g., picture) presentation, or similarly to the fast forwarding or fast reversing (or slow forward or backward motion) of a video sequence, or to raising or lowering a characteristic of a sound presentation or video display, e.g., increase or decrease resolution, increase or decrease color, increase or decrease contrast, increase or decrease bass or treble, or otherwise shift a balance associated with media content being rendered by the device. Thus, the invention may apply to portable media players such as devices that incorporate the wallet design WD, the roller design RD or the theatre design TD, car radios, TV displays and other monitors, sound systems, cell phones, PDAs, etc., i.e., all media rendering devices. However, as explained earlier, while exemplary embodiments are herein described in connection with a media device, this is for illustrative convenience, since the invention is not so limited. The invention applies anywhere a switch of functionality is desired, e.g., a light, a continuum of functionality is desired, e.g., a light that can be dimmed anywhere between on and off settings. The examples of such scenarios are endless, and the embodiments of the invention illustrated herein are intended to apply to all such scenarios, both foreseeable and unforeseeable.

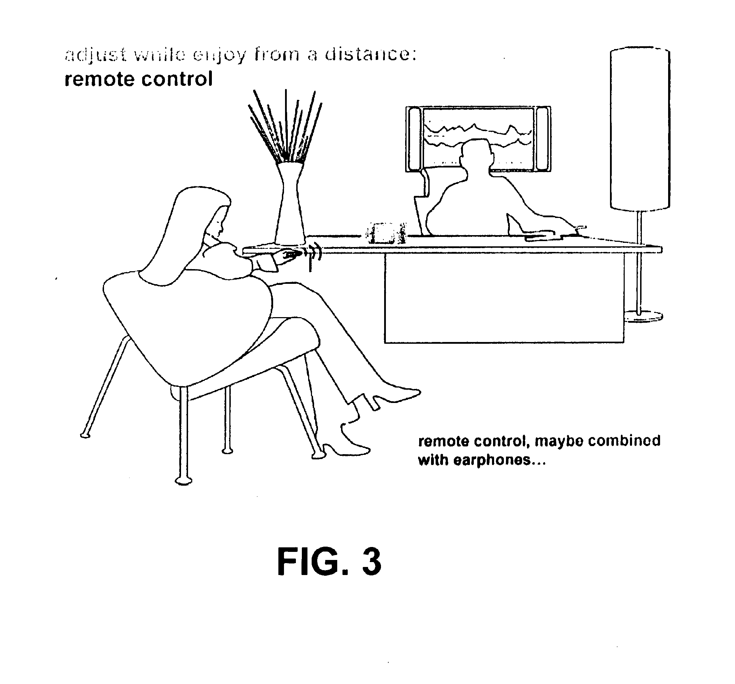

Fig. 3 illustrates a usage scenario of the present invention wherein a user can control various functionality of the portable media player from a distance via a remote control, ranging from synchronization control to rendering of media via an embodiment of the user interface control of the invention. For instance, a wing of the theatre design TD may be removed and operate as a remote control and a sliding door can be removed to operate as a remote control. Other embodiments can have a removable remote control portion as well. Moreover, a remote control separate from a device can be provided for the purpose of providing remote control services, which may include one or more embodiments of the user interface controls of the invention. The device may also be provided with a docking station including capabilities for different types of connections to various computing objects and devices, such as the exemplary computing devices illustrated in Figs. 1A-1C.

### Exemplary User Interface Controls

Figs. 4A to 4D illustrate exemplary user interface controls for implementation with the various devices and scenarios contemplated by the present invention, wherever the controls may be located on the device. In this regard, exemplary non-limiting control functionality for a portable media player may include: "Escape," "Start," "Options," "More," "OK," "Back," "Forward," "Play," Pause," "Up," "Down," "Fast Forward," "Reverse," "Skip Forward," "Skip backwards," "Menu," "Left," "Right," "Mute," "Volume Up," Volume Down," preset(s) for specialized functionality and/or any combination or permutation of these controls (e.g., play and pause are often combined with a single control). The user interface controls of the invention may be used to carry out functionality with respect to any one or more of these non-limiting functions.

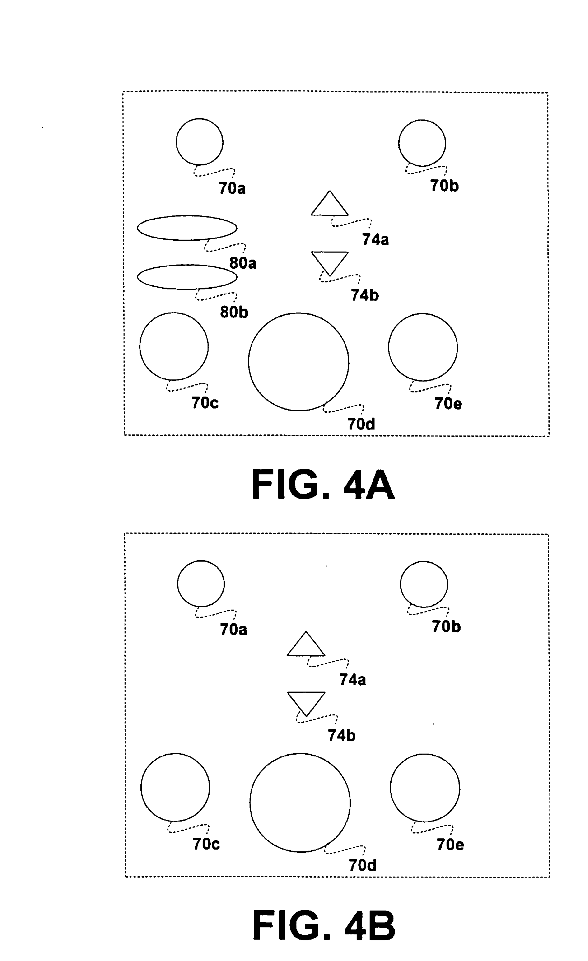

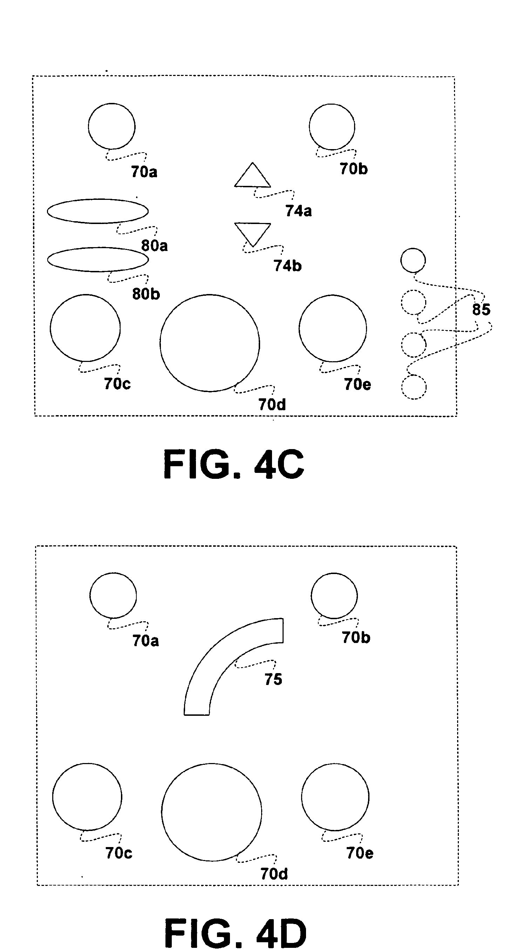

Fig. 4A illustrates a user interface control set including up and down controls 74a and 74b for facilitation of navigation, various buttons 70a, 70b, 70c, 70d, 70e, etc. for typical media functionality and buttons 80a, 80b, etc. for less standard media player functionality, such as "options," "more," etc. Fig. 4B illustrates a variation on the user interface control set of Fig. 4A without optional media player functionality. Fig. 4C illustrates another variation on the user interface control set of Fig. 4A, which further includes one or more preset buttons 85 for the provision of specialized preset functionality, such as functionality that is uncommon, a particularly unique combination of typical functionalities, or functionality that is particular to a portable media player design. Fig. 4D is yet another variation of a user interface control set wherein a substantially arc shaped touch pad control 75 is provided in accordance with various embodiments tailored to a first natural finger movement, e.g., providing an enhanced user experience for navigation and media control.

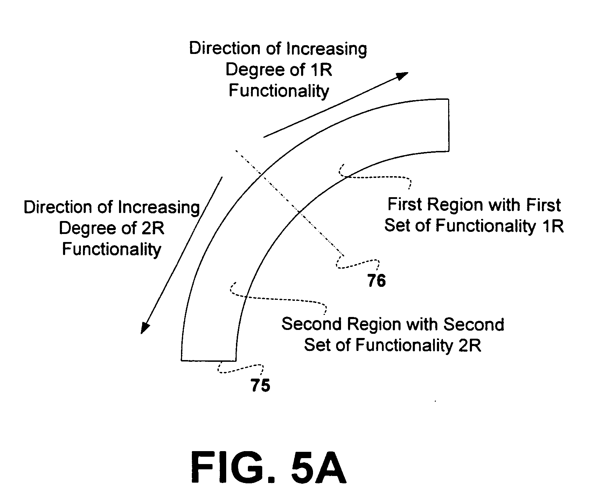

Fig. 5A illustrates the functionality the substantially arc shaped touch pad control 75 in more detail. One can appreciate that due to the sweeping, radial movement of a thumb or other substantially longitudinally oriented input device, the arc shaped control provides an enhanced user interface experience and ergonomic solution to the awkward input control problem for a user who is holding and simultaneously controlling any of the various portable media players, such as the theatre design TD, disclosed herein. In more detail, arc 75 is divided into two regions of control, substantially about the center 76 of the arc. A first set of functionality is associated with the first region 1R and a second set of functionality is associated with the second region 2R. In another embodiment, a tap to the arced touch pad 75 is given special functional meaning. In another embodiment, a tap to the first region 1R is given a first functional meaning and a tap to the second region 2R is given a second functional meaning.

In one embodiment, sets of functionality have one functional purpose for each functionality represented by the set, but the difference from functionality from functionality within the set lies in the degree of functional result. For instance, all of the functionalities of a first set of functionality might represent "up" functionality, but the difference from functionality to functionality lies in how much "up" is effected. Similarly, all of the functionalities of a second set of functionality might represent "down" functionality, but the difference from functionality to functionality lies in how much "down" is effected. In one embodiment, this is achieved with a measure of how far user input is from the center 76. For instance, continuing along the example using "up" and "down" as exemplary sets of functionalities, one embodiment works as follows: the farther the user input is from center line 76 in the first region 1R, the greater the degree of "up" that is applied whereas the closer the user input is to the center line 76 in the first region 1R, the less the degree of "up" that is applied; similarly, the farther the user input is from center line 76 in the second region 2R, the greater the degree of "down" that is applied whereas the closer the user input is to the center line 76 in the second region 2R, the less the degree of "down" that is applied. The direction of increasing functionality illustrated can optionally be reversed to the direction of decreasing functionality, and the use of "up" and "down" was for exemplary purposes only. Generally, as mentioned above, the controls of the invention are suited for any two opposing sets of functionality such as "up and down," "in and out", "left and right," "volume up and volume down," "forward and reverse," "skip forward and skip backward," more light and less light," and so on, although the invention is not limited to two sets of opposing functionality. Additionally, one or more gradients across the surface of the touchpad may be calculated in real-time based upon recent historical interaction with the touchpad 75 in order to describe how fast a finger is sweeping (velocity), or how much the finger is accelerating. The velocity and acceleration of the finger may be taken into account when detecting input to the touchpad, and correspondingly determining a functionality to output. These possibilities apply to all embodiments of the user interface controls of the invention described herein.

In one embodiment, the user interface touchpad control is substantially in the shape of a quarter circle. Thus, a user interface touchpad control is provided that is substantially in the shape of an arc comprising a first region for first touchpad input and a second region for second touchpad input, wherein the first region is divided by the second region substantially via the center of the arc. In another embodiment, the user interface control comprises a touch pad arc divided into a first region of control providing a first set of functionality and a second region of control providing a second set of functionality different from the first set of functionality, wherein the first and second regions are divided substantially about the orthogonal center line of the arc. As mentioned, the user interface control may have the first set of functionality provide a set of functionality opposite to the second set of functionality. For example, in the illustrative embodiment, the first set of functionality includes varying degrees of "up" functionality and the second set of functionality includes varying degrees of "down" functionality. In this regard, the farther from the center line the touch pad arc receives input in the first region, the greater the degree of functionality of the first set of functionality is provided and the farther from the center line the touch pad arc receives input in the second region, the greater the degree of functionality of the second set of functionality is provided.

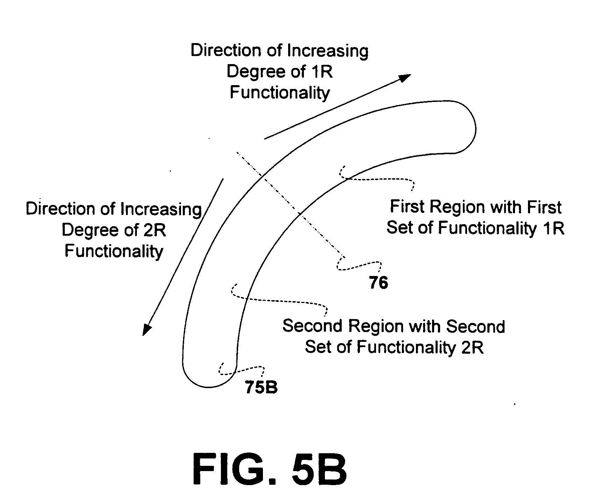

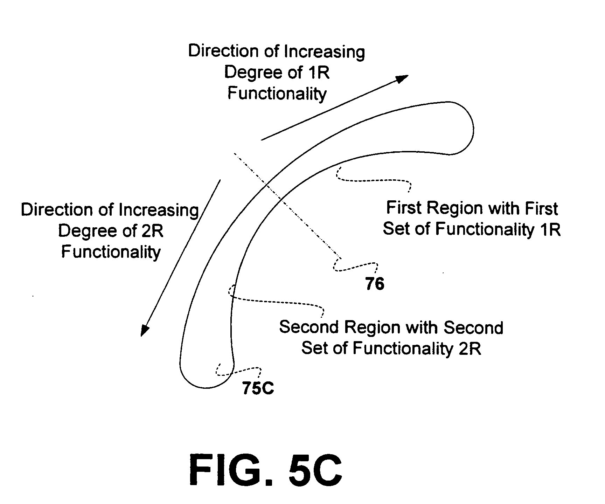

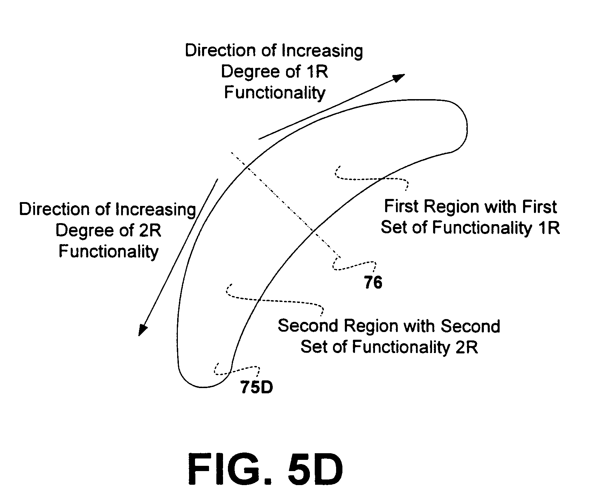

Another embodiment relating to a sweeping finger movement, such as a sweeping thumb movement while holding a device, for instance, is illustrated in Fig. 5B, showing that the ends of arc 75B can curve or follow some other convenient pattern consistent with a finger movement. Further illustrating the spirit of the sweeping finger movement, Fig. 5C illustrates an embodiment wherein the touchpad of arc 75C is thicker at the ends of a movement, and similarly, Fig. 5D illustrates an embodiment wherein the touchpad of arc 75D is thinner at the ends of a movement.

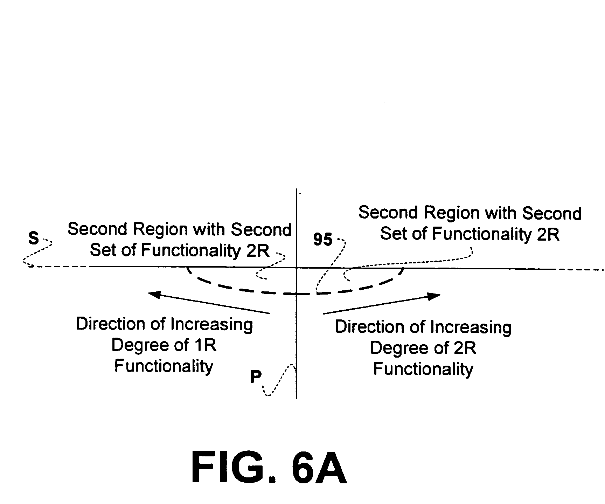

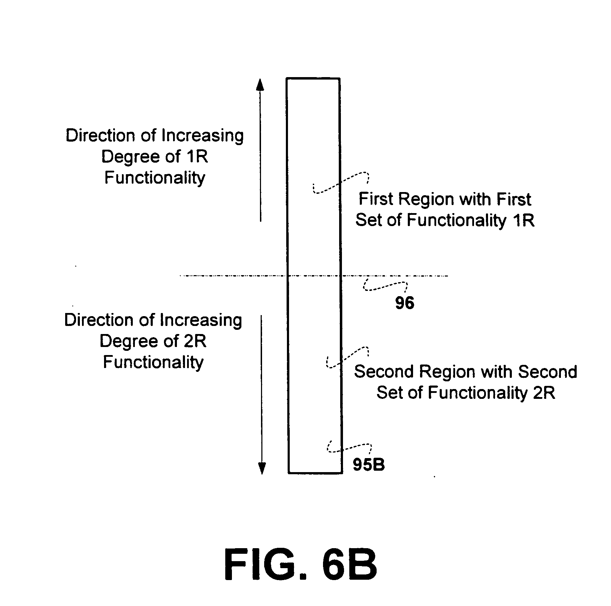

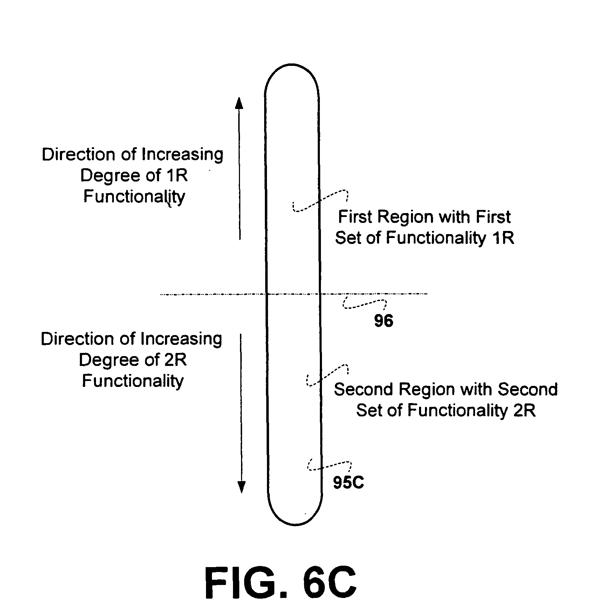

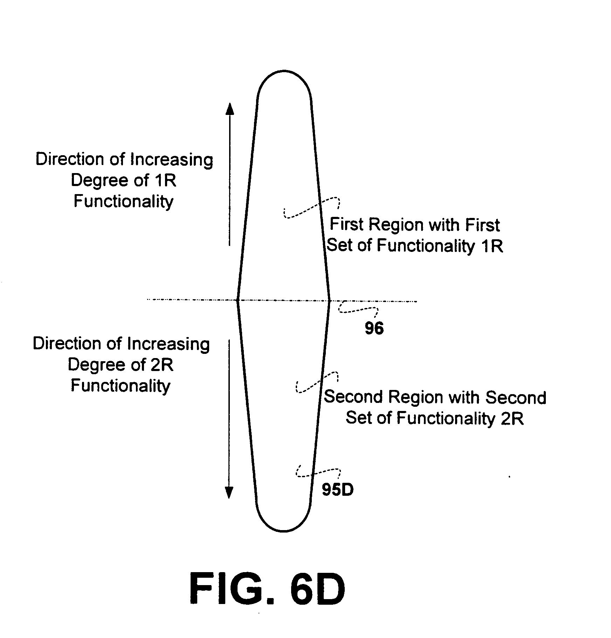

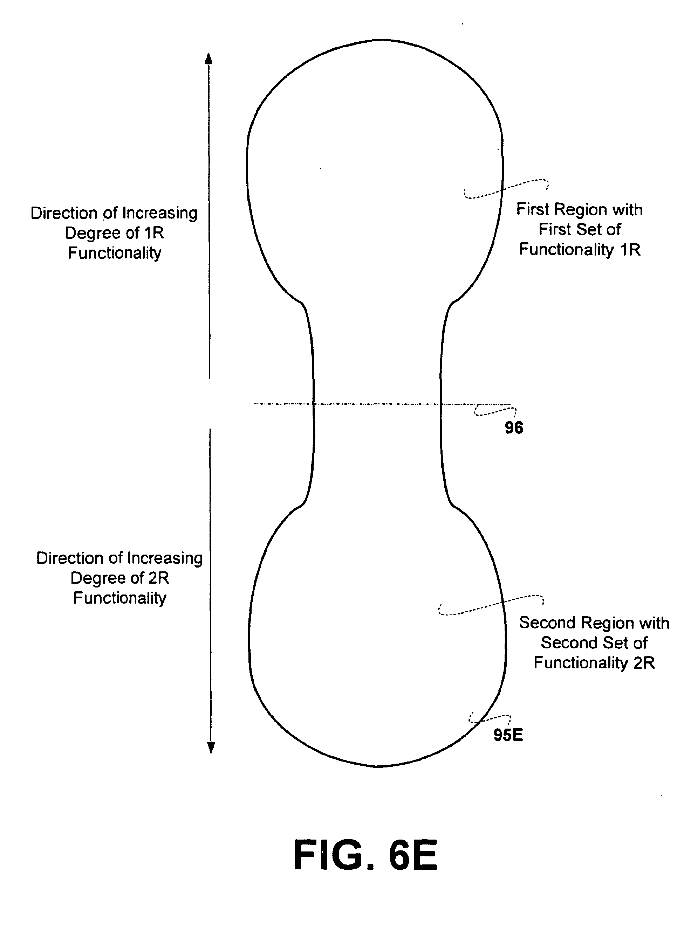

Other embodiments of the touchpad user interface controls of the invention tailored to a second natural movement of a finger are illustrated in Figs. 6A to 6E. In these embodiments, the finger movement is extension and retraction of the distal end of a finger via bending at the joint(s) of the finger. For instance, when the thumb bends towards the palm and then extends out straight again, this movement is implicated. Thus, in Fig. 6A, a touchpad arc cavity 95 is illustrated from the side of a device having a surface S, whereby the touchpad arc cavity 95 is an indentation of or embedded in the surface S of the device. A plane P divides the two regions 1R and 2R of the touchpad 95. While obscuring the three-dimensional aspect of the arc 95, Figs. 6B to 6E are top views of various embodiments of touchpad 95. For instance, Fig. 6B illustrates a touchpad curved cavity 95B of substantially uniform width. Fig. 6C illustrates a variation of touchpad curved cavity 95C having rounded ends. Figs. 6D and 6E illustrate embodiments wherein the touchpad curved cavities 95D and 95E are thinner and thicker at the ends of the finger movement, respectively. Fig. 6E illustrates a curved cavity 95E having scalloped ends. Plane P may be, for instance, further defined by substantially orthogonal center line 96 in each of the embodiments of Figs. 6B to 6E. It should also be noted that curved cavity embodiments of Figs. 6A to 6E are not mutually exclusive to the arced embodiments of Figs. 5A to 5D, and that the curved cavity and arc may be implemented together in combination to varying degrees in accordance with a more complex finger movement.

Also, it can be appreciated that there is underlying software functionality to a capacitive touch pad or the like wherein a computer readable medium having computer executable instructions for providing control support to a touch pad arc in accordance with the invention may comprise a detection component for detecting where touch pad input of a touch pad arc is received, whereby the touch pad arc is divided into a first region and a second region substantially about a predefined demarcation of the touch pad arc and an output component for outputting a functional result, whereby if input is received in the first region, a functional result of a first set of functional results is output by the output component, and whereby if input is received in the second region, a functional result of a second set of functional results is output by the output component.

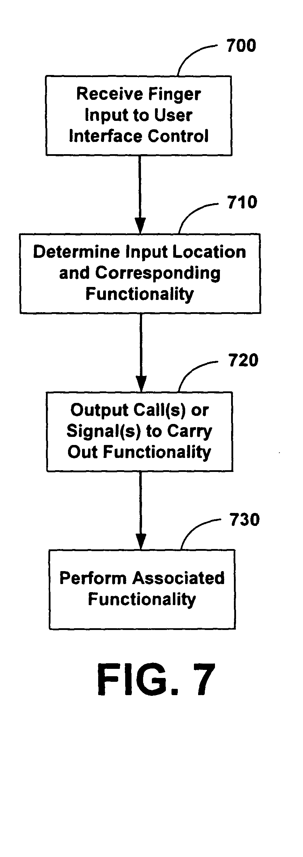

Fig. 7 is a flow diagram of an exemplary interaction with a user interface control 85 or 95 of the invention. At 700, the user places a finger onto the touchpad. At 710, a starting location of the finger is determined. If the whole touchpad represents a single functionality, then the starting location relatively determines a degree of functionality to apply. If the touchpad is divided into regions 1R and 2R, then the starting location relatively determines a degree of functionality to apply based on the associated region 1R or 2R. For instance, a user may input to the middle of first region 1R to indicate a medium raise to the volume. At 720, an output component outputs a function call or a signal indicating the appropriate functionality associated with the input to the touchpad at 710, e.g., outputs a signal to the sound subsystem of the device to raise the volume a medium amount. One or more "middle man" objects, application programming interfaces, drivers, etc. may contribute to the effort of translating touchpad input into associated device functionality. At 730, the functionality is carried out, e.g., the volume becomes louder on the device. At 710, a gradient or vector of movement across the touchpad may also be taken into account, i.e., a faster, or accelerating, movement of a finger may optionally influence the degree of functionality determined at 710 and carried out via 720 and 730.

There are multiple ways of implementing code that may be used incident to the present invention, e.g., an appropriate API, tool kit, driver code, operating system, control, standalone or downloadable software object, etc. which enables applications and services to use and exploit the improved user experience provided by the invention. The invention contemplates the use of the invention from the standpoint of the user interface itself, an API (or other software object), as well as from a software or hardware object that communicates in connection with data generated or used incident to the user interface controls of the invention. Thus, various implementations of the invention described herein may have aspects that are wholly in hardware, partly in hardware and partly in software, as well as in software.

As mentioned above, while exemplary embodiments of the present invention have been described in connection with various computing devices and network architectures, the underlying concepts may be applied to any computing device or system for which it is desirable to interface via a natural finger movement. For instance, any peripheral or computing device can take advantage of the user interface controls of the invention, and the algorithm(s) and hardware implementations used in connection with the invention may be applied to the operating system of a computing device, provided as a separate object on the device, as part of another object, as a reusable control, as a downloadable object from a server, as a "middle man" between a device or object and the network, as a distributed object, as hardware, in memory, a combination of any of the foregoing, etc. While exemplary programming languages, names and examples are chosen herein as representative of various choices, these languages, names and examples are not intended to be limiting. One of ordinary skill in the art will appreciate that there are numerous ways of providing object code and nomenclature that achieves the same, similar or equivalent functionality achieved by the various embodiments of the invention.

As mentioned, the various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. One or more programs that are used incident to the user interface controls of the invention may make use of a data processing API, reusable controls, or the like, which are preferably implemented in a high level procedural or object oriented programming language to communicate with a computer system. However, the program(s) can be implemented in assembly or machine language, if desired. In any case, the language may be a compiled or interpreted language, and combined with hardware implementations.

Various aspects of the invention may also be practiced via communications embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, a video recorder or the like, or a receiving machine having the signal processing capabilities as described in exemplary embodiments above becomes an apparatus for practicing the invention. When implemented on a general-purpose processor, the program code combines with the processor to provide a unique apparatus that operates to invoke the functionality of the present invention. Additionally, any storage techniques used in connection with the present invention may invariably be a combination of hardware and software.

While the present invention has been described in connection with the preferred embodiments of the various figures, it is to be understood that other similar embodiments may be used or modifications and additions may be made to the described embodiment for performing the same function of the present invention without deviating therefrom. For example, while exemplary network environments of the invention are described in the context of a networked environment, such as a peer to peer networked environment, one skilled in the art will recognize that the present invention is not limited thereto, and that the methods, as described in the present application may apply to any computing device, peripheral or environment, such as a gaming console, handheld computer, portable computer, etc., whether wired or wireless, and may be applied to any number of such computing devices connected via a communications network, and interacting across the network, wherever media is located. Furthermore, it should be emphasized that a variety of computer platforms, including handheld device operating systems and other application specific operating systems are contemplated, especially as the number of wireless networked devices continues to proliferate. Still further, the present invention may be implemented in connection with or across a plurality of processing chips or devices, and storage may similarly be effected across a plurality of devices. Therefore, the present invention should not be limited to any single embodiment, but rather should be construed in breadth and scope in accordance with the appended claims.

## Claims

1. A user interface control, comprising:
a touchpad control substantially in the shape of an arc.

2. A user interface control according to claim 1, wherein the arc is of substantially uniform width.

3. A user interface control according to claim 2, wherein the touchpad control is substantially in the shape of a quarter circle.

4. A user interface control according to claim 1, wherein the arc is at least one of (A) thinner than at least one end of the arc at the middle of the arc and (B) thicker than at least one end of the arc at the middle of the arc and the arc includes at least one of (C) a curved end and (D) a substantially straight end.

5. A user interface control according to claim 1, wherein the touchpad control includes a first region for first touchpad input for a first function and a second region for second touchpad input for a second function, different from said first function, wherein said first region and said second region are divided substantially about the middle of the arc.

6. A user interface control according to claim 1, wherein the touchpad control is divided into a first region of control providing a first set of functionality and a second region of control providing a second set of functionality different from said first set of functionality, wherein said first and second regions are divided substantially about the orthogonal center line of the arc.

7. A user interface control according to claim 6, wherein said first set of functionality provides a set of functionality opposite to said second set of functionality.

8. A user interface control according to claim 6, wherein at least one of said first set of functionality and said second set of functionality includes varying degrees of functionality for at least one of Escape, Start, Options, More, Less OK, Back, Forward, Play, Pause, Up, Down, Fast Forward, Reverse, Skip Forward, Skip Backwards, Menu, Left, Right, Mute, Volume Up, Volume Down, Raise Light and Lower Light functionalities.

9. A user interface control according to claim 6, wherein the degree of functionality of at least one of said first set of functionality and said second set of functionality is determined based upon a distance of an input in said first region of control from the center line of the touch pad arc.

10. A user interface control according to claim 6, wherein the degree of functionality of at least one of said first set of functionality and said second set of functionality is determined based upon at least one of (A) a velocity and (B) an acceleration associated with an input to the user interface control calculated from recent historical interaction with the user interface control.

11. A user interface control according to claim 1, wherein said arc is substantially in the form of a curved cavity in the surface of a device including the user interface control.

12. Any of a portable media player, a remote control for a computing device, a computing device, a swappable component of a computing device and a component for augmenting a computing device comprising the user interface control of claim 1.

13. A user interface control implemented in a surface of a device, comprising:
a touchpad control substantially in the form of a curved cavity of the surface.

14. A user interface control according to claim 13, wherein the curved cavity is of substantially uniform width.

15. A user interface control according to claim 14, wherein the curved cavity is substantially in the shape of a quarter circle.

16. A user interface control according to claim 13, wherein the curved cavity is at least one of (A) thinner than at least one end of the curved cavity at the middle of the curved cavity and (B) thicker than at least one end of the curved cavity at the middle of the curved cavity and the curved cavity includes at least one of (C) a curved end and (D) a substantially straight end.

17. A user interface control according to claim 13, wherein the touchpad control includes a first region for first touchpad input for a first function and a second region for second touchpad input for a second function, different from said first function, wherein said first region and said second region are divided substantially about the middle of the curved cavity.

18. A user interface control according to claim 13, wherein the touchpad control is divided into a first region of control providing a first set of functionality and a second region of control providing a second set of functionality different from said first set of functionality, wherein said first and second regions are divided substantially about an orthogonal center plane of the curved cavity.

19. A user interface control according to claim 18, wherein said first set of functionality provides a set of functionality opposite to said second set of functionality.

20. A user interface control according to claim 18, wherein at least one of said first set of functionality and said second set of functionality includes varying degrees of functionality for at least one of Escape, Start, Options, More, Less OK, Back, Forward, Play, Pause, Up, Down, Fast Forward, Reverse, Skip Forward, Skip Backwards, Menu, Left, Right, Mute, Volume Up, Volume Down, Raise Light and Lower Light functionalities.

21. A user interface control according to claim 18, wherein the degree of functionality of at least one of said first set of functionality and said second set of functionality is determined based upon a distance of an input in said first region of control from the center line of the touch pad curved cavity.

22. A user interface control according to claim 18, wherein the degree of functionality of at least one of said first set of functionality and said second set of functionality is determined based upon at least one of (A) a velocity and (B) an acceleration associated with an input to the user interface control calculated from recent historical interaction with the user interface control.

23. Any of a portable media player, a remote control for a computing device, a computing device, a swappable component of a computing device and a component for augmenting a computing device comprising the user interface control of claim 13.

24. A method for interacting with a user interface control including a touchpad control substantially in the shape of an arc or a curved cavity, comprising:
receiving input to the touchpad control;
determining a location on the touchpad control and a corresponding degree of functionality associated with the location; and
outputting at least one of at least one function call and at least one signal based upon the location and degree of functionality associated with the location.

25. A method according to claim 24, further comprising:
performing the functionality to the appropriate degree in accordance with said at least one of at least one function call and at least one signal.

26. A method according to claim 24, wherein said determining includes determining a distance of the input from the center line of the touchpad control.

27. A method according to claim 24, wherein said determining includes determining at least one of (A) a velocity and (B) an acceleration associated with the input based upon data associated with recent historical interaction with the user interface control.

28. A method according to claim 24, wherein said determining includes determining whether the input is in a first region for first touchpad input for a first function or a second region for second touchpad input for a second function, different from said first function, wherein said first region and said second region are divided substantially about a center of the touchpad control.

29. A method according to claim 24, wherein the touchpad control is divided into a first region of control providing a first set of functionality and a second region of control providing a second set of functionality different from said first set of functionality, wherein said first and second regions are divided substantially about a center of the touchpad control, and wherein said determining includes determining whether the input is associated with the first set of functionality or the second set of functionality.

30. A method according to claim 29, wherein said first set of functionality provides a set of functionality opposite to said second set of functionality.

31. A method according to claim 29, wherein at least one of said first set of functionality and said second set of functionality includes varying degrees of functionality for at least one of Escape, Start, Options, More, Less OK, Back, Forward, Play, Pause, Up, Down, Fast Forward, Reverse, Skip Forward, Skip Backwards, Menu, Left, Right, Mute, Volume Up, Volume Down, Raise Light and Lower Light functionalities.

32. A computer readable medium comprising computer executable instructions for performing the method of claim 24.

33. A computing device comprising means for performing the method of claim 1.

34. A computer readable medium including computer executable modules having computer executable instructions for providing control support to a touch pad, the modules comprising:
a detection component for detecting where touch pad input of a touch pad is received, whereby the touch pad is divided into a first region and a second region substantially about an orthogonal center line of the touch pad; and
an output component for outputting a functional result, whereby if input is received in the first region, a functional result of a first set of functional results is output by said output component, and whereby if input is received in the second region, a functional result of a second set of functional results is output by said output component.

35. A computer readable medium according to claim 34, wherein the touch pad is at least one of (A) substantially in the shape of an arc and (B) substantially in the form of a curved cavity in a surface.

36. A processing subunit of a computing device for providing control support to a touch pad, comprising:
a detection component for detecting where touch pad input of a touch pad is received, whereby the touch pad is divided into a first region and a second region substantially about middle of the touch pad; and
an output component for outputting a functional signal, whereby if input is received in the first region, a functional signal of a first set of functional signals is output by said output component, and whereby if input is received in the second region, a functional signal of a second set of functional signals is output by said output component.

37. A processing subunit according to claim 36, wherein the touch pad is at least one of (A) substantially in the shape of an arc and (B) substantially in the form of a curved cavity in a surface.

38. A computing device having a user interface control including a touchpad control substantially in the shape of an arc or a curved cavity, comprising:
means for detecting input to the touchpad control;
means for determining a location on the touchpad control and a corresponding degree of functionality associated with the location; and
means for outputting at least one of at least one function call and at least one signal based upon the location and degree of functionality associated with the location.

39. A computing device according to claim 38, further comprising:
means for functioning to the appropriate degree in accordance with said at least one of at least one function call and at least one signal.

40. A computing device according to claim 38, wherein said means for determining includes calculating a distance of the input from a center line of the touchpad control.

41. A computing device according to claim 38, wherein said means for determining includes means for determining at least one of (A) a velocity and (B) an acceleration associated with the input based upon data associated with recent historical interaction with the user interface control.

42. A computing device according to claim 38, wherein the touchpad control is divided into a first region of control providing a first set of functionality and a second region of control providing a second set of functionality different from said first set of functionality, wherein said first and second regions are divided substantially about a center of the touchpad control, and wherein said means for determining includes means for determining whether the input is associated with the first set of functionality or the second set of functionality.
